Europäisches Patentamt

(19) European Patent Office

Office européen des brevets

(11) Numéro de publication: **0 273 796**
**B1**

(12) **FASCICULE DE BREVET EUROPEEN**

(45) Date de publication du fascicule du brevet:
27.12.90

(51) Int. Cl.⁵: **B62D 33/06**

(21) Numéro de dépôt: **87402688.3**

(22) Date de dépôt: **27.11.87**

(54) Suspension élastique de cabine de tracteur agricole.

(30) Priorité: **28.11.86 FR 8616636**

(43) Date de publication de la demande:
**06.07.88 Bulletin 88/27**

(45) Mention de la délivrance du brevet:
**27.12.90 Bulletin 90/52**

(84) Etats contractants désignés:
**DE GB**

(73) Titulaire: **RENAULT AGRICULTURE, 7, Rue Dewoitine,
F-78141 Velizy-Villacoublay(FR)**

(72) Inventeur: **Rolland, Marcel, 4, Square du Clermontois,
F-78310 Maurepas(FR)**
Inventeur: **Vignaud, Alain, 49, avenue Gabriel Péri,
F-91370 Verrières le Buisson(FR)**

(74) Mandataire: **Ernst-Schonberg, Michel, R.N.U.R.
S. 0804 B.P. 103 8 & 10, avenue Emile-Zola,
F-92109 Boulogne Billancourt(FR)**

(56) Documents cités:
US-A- 3 732 941

PATENT ABSTRACTS OF JAPAN,
vol. 7, no. 265 (M-258)[1410], 25 novembre 1983; &
JP-A-58 145 578 (HINO JIDOSHA KOGYO
K.K.) 30-08-1983
TECHNICAL PAPER SERIES, Detroit, 27 février
- 3 mars 1978, no. 780409, pages 4,5, Society of
Automotive Engineers, Inc., Pennsylvania, US; A.A.
SELMAN et al.: "A cab suspension for transcontinental
operation"

ACTORUM AG

## Description

L'invention concerne une suspension élastique de cabine de tracteur agricole qui comporte un châssis rigide, une cabine et une suspension élastique qui supporte ladite cabine sur ledit châssis, cette suspension étant constituée par des structures transversales avant et arrière portant des attaches d'éléments de la suspension et des structures reliées par des supports de liaison à la cabine.

L'invention concerne plus particulièrement une telle suspension dans laquelle des structures transversales portent les attaches de jambes élastiques montées sur des supports rapportés sur le châssis du tracteur.

Ce type de suspension connu par la publication FR-A 2 432 966 accroît le confort du conducteur lorsque le tracteur se déplace sur le terrain irrégulier mais ne permet pas le montage ou le démontage de l'ensemble constitué par la cabine et de sa suspension ainsi que l'exigent les méthodes de fabrication ou de réparation.

L'invention propose une solution au problème précité et concerne une suspension élastique agencée pour que la cabine et sa suspension puissent être aisément désolidarisées du châssis du tracteur par des moyens simples et sans entraîner de dépenses importantes de conception.

Le problème posé est résolu, conformément à l'invention, par le fait que les structures transversales avant et arrière sont notamment formées par des traverses respectivement ancrées sur des supports de liaison avec le châssis rigide et portent les jambes élastiques avant et arrière parmi lesquelles les jambes avant supportent, par l'intermédiaire d'organes de liaison, conjointement la cabine et les structures latérales, tandis que les jambes arrière supportent la cabine:

La suspension ainsi réalisé autorise la confection d'une unité de montage constituée par la cabine, les jambes élastiques et leurs supports, dont le positionnement par rapport au châssis est facilité par les moyens de rigidification additionnels constitués par l'ensemble des traverses avant et arrière.

La suspension précitée est adaptable à une pluralité de cabines, du fait qu'elle facilite la séparation de la cabine de son soubassement porteur de l'ensemble des organes de suspension dont la rigidité est conférée par la combinaison des traverses et des structures latérales. Par voie de conséquence, la suspension permet la réalisation d'un sous-ensemble rigide susceptible d'être monté séparément ou conjointement avec la cabine sur le poste d'assemblage du tracteur.

D'autres caractéristiques et avantages de l'invention seront mieux compris à la lecture de la description qui va suivre, d'un mode de réalisation de la suspension, faite en référence au dessin annexé, dans lequel :

- la figure 1 représente schématiquement une vue latérale de la cinématique de la suspension d'une cabine de conduite montée sur un châssis de tracteur,

- la figure 2 représente une vue transversale de la partie avant des éléments cinématiques de la suspension représentée à la figure 1,
- la figure 3 représente une vue transversale de la partie arrière des éléments cinématiques de la suspension représentée à la figure 1,

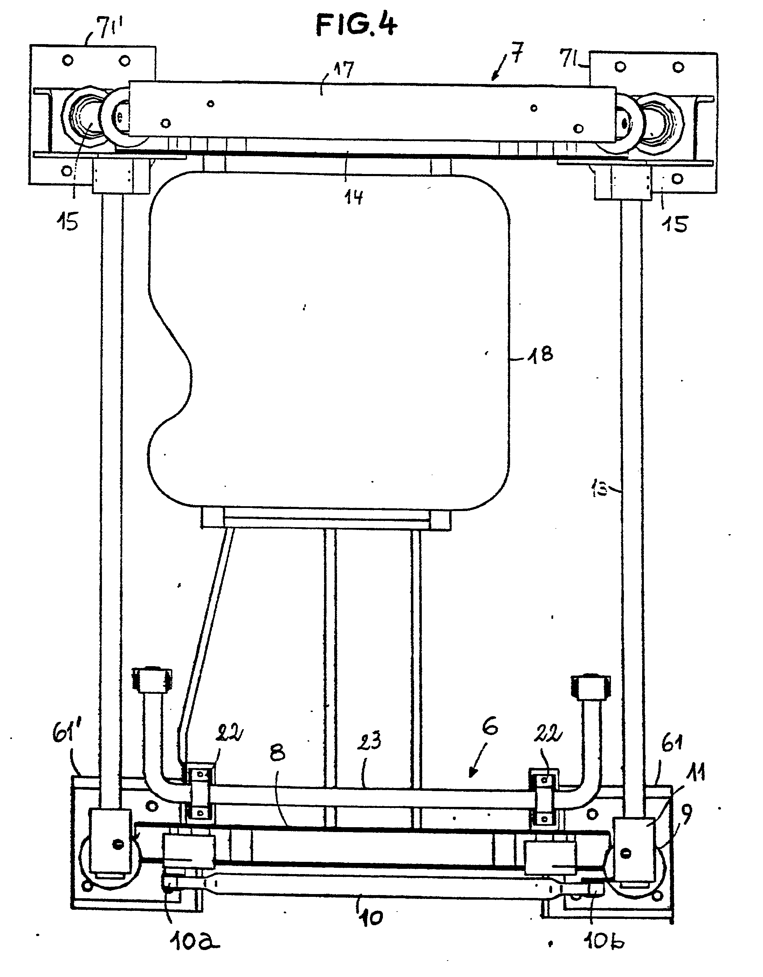

- la figure 4 est une représentation en plan de la suspension,

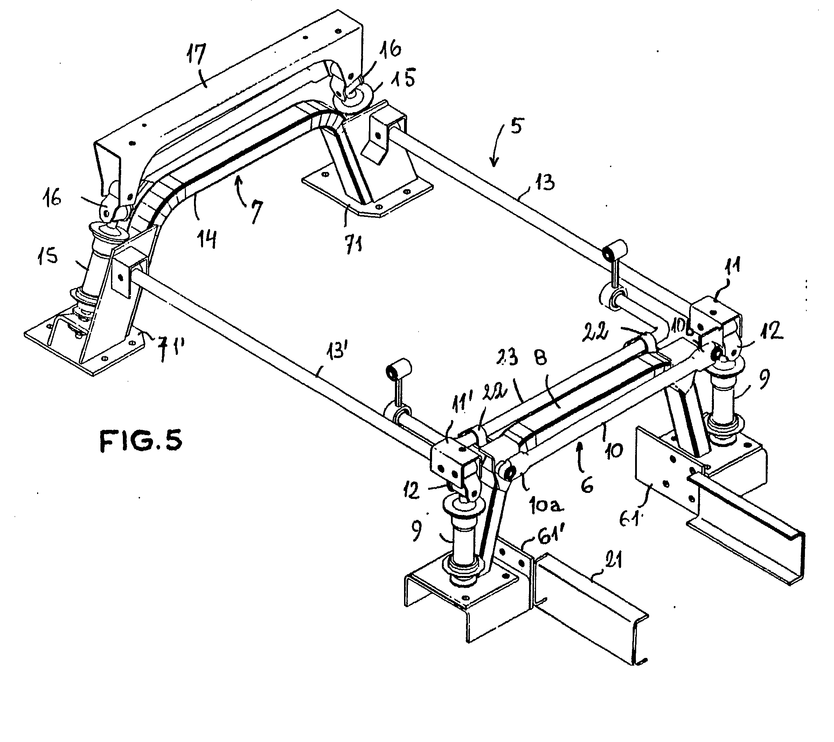

- la figure 5 est une représentation en perspective de la suspension.

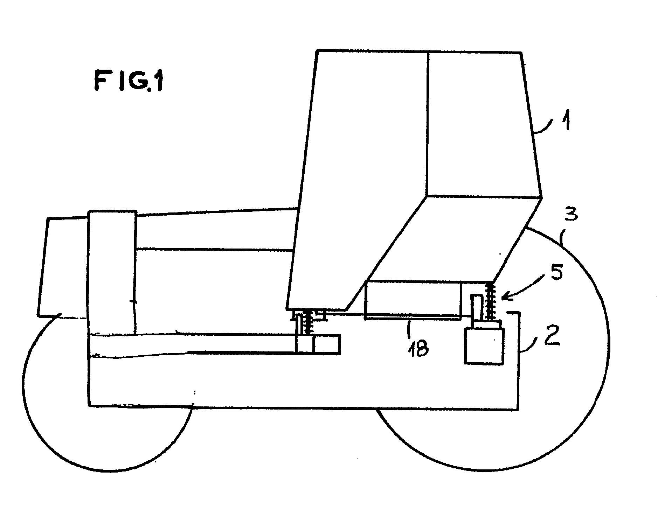

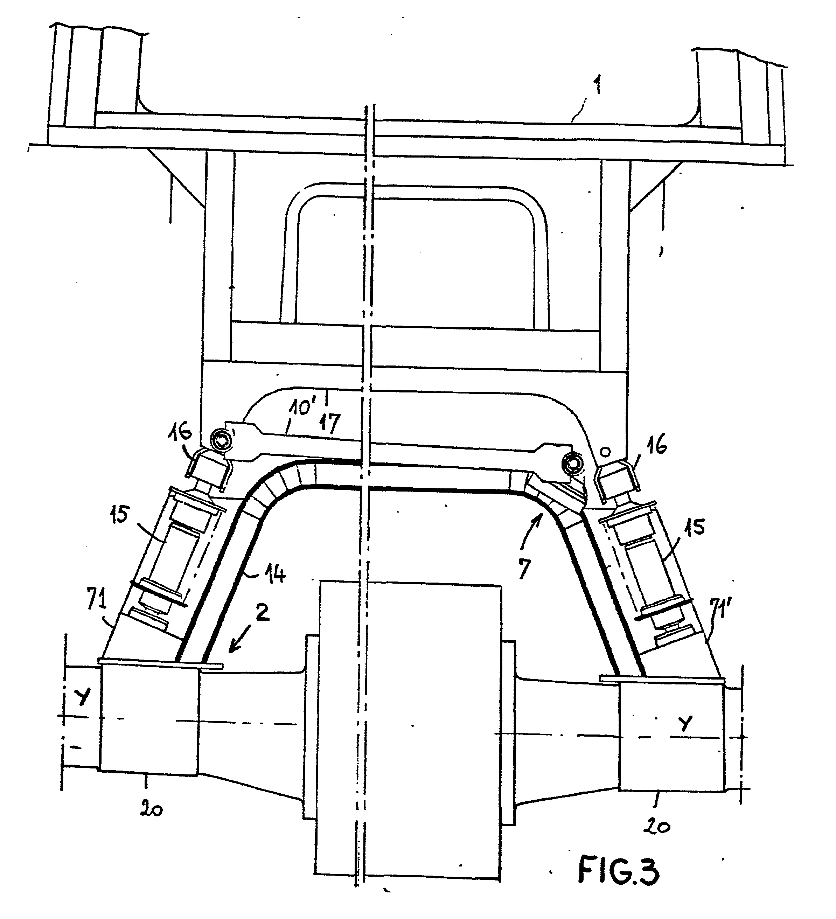

Les figures 1 à 3 représentent la cabine 1 et le châssis 2 d'un tracteur agricole monté sur des roues 3.

La suspension élastique 5 est montée entre le châssis 2 et la cabine 1.

La suspension 5 est constituée par une structure avant et arrière 6, 7 réalisées sous la forme de supports latéraux portant des ancrages d'éléments de la suspension.

La structure avant 6 est ainsi constituée par des supports 61, 61' dont les flancs, tournés vers les longerons 21 du châssis 2, sont boulonnés sur ceux-ci.

Les supports 61, 61' portent les ancrages des pieds obliques d'une traverse avant 8 qui possède une configuration générale en U et constituent les appuis de jambes élastiques 9 combinant de manière en soi connue un amortisseur télescopique placé concentriquement à un ressort disposés sensiblement dans le plan de la traverse. L'élément horizontal de la traverse 8 a un support destiné à coopérer avec une première extrémité 10a d'une barre transversale 10 disposée de manière que son orientation soit légèrement inclinée par rapport à l'horizontale et elle est articulée à son autre extrémité 10b sur un support latéral de liaison 11 avec le châssis de la cabine 1.

Le support de liaison tel que 11 est solidaire de la jambe élastique 9 correspondante par une rotule 12 et porte, outre l'ancrage de la barre transversale 10, le palier élastique de l'extrémité d'une structure latérale formée par une barre longitudinale 13.

D'une manière analogue, le support latéral opposé 11' recevant le châssis de la cabine est solidaire d'une autre jambe élastique 9 par une rotule 12 et porte le polier élastique de l'extrémité d'une structure latérale formée par une barre longitudinale 13'.

Les barres longitudinales 13, 13' sont reçues par leur autre extrémité, dans des paliers élastiques portés par les supports 71,71' de la structure arrière 7.

Les supports 71, 71' portent les ancrages des pieds obliques d'une traverse arrière 14 qui possède également une configuration générale en U, et constituent les appuis de jambes élastique 15 analogues aux jambes 9 disposées sensiblement dans le plan de la traverse 14. La traverse arrière supporte, par ailleurs au moyen de fixations, des organes du châssis tels qu'un réservoir de combustible 18 ou une installation de distribution hydraulique.

La partie haute de chaque jambe élastique 15 porte une rotule 16 recevant une traverse supérieure 17 qui constitue un élément de structure de la cabine qui lui confère une bonne rigidité au niveau de son plancher.

Ainsi que cela a été mentionné pour la traverse avant 8, la traverse 14 porte également l'ancrage de l'extrémité d'une barre transversale 10' reliée par son autre extrémité à la traverse supérieure 17.

La traverse supérieure 17 s'étend sensiblement dans le plan transversal contenant la traverse arrière 14 et l'axe YY de l'essieu arrière.

A cet effet, les supports 71, 71' portent respectivement une base de fixation portée par les trompettes 20 constitutives de l'essieu moteur du tracteur porteuses des socles de montage des supports 71, 71'.

Par ailleurs, la traverse 8 de structure avant porte les paliers 22 d'une barre 23 antidévers en forme de U qui s'étend parallèlement à ladite traverse 8 dont les branches horizontales s'étendent parallèlement aux barres 13, 13' et portent à leurs extrémités l'articulation de biellettes de suspension de la cabine.

La suspension fonctionne de la manière suivante en remarquant que les jambes élastiques 9, 15 permettent au châssis de la cabine fixé notamment sur ses supports 11 et sur la traverse supérieure 17 d'amortir les déplacements consécutifs au mouvement de roulis et de tanguage.

## Amortissement des oscillations consécutives au roulis

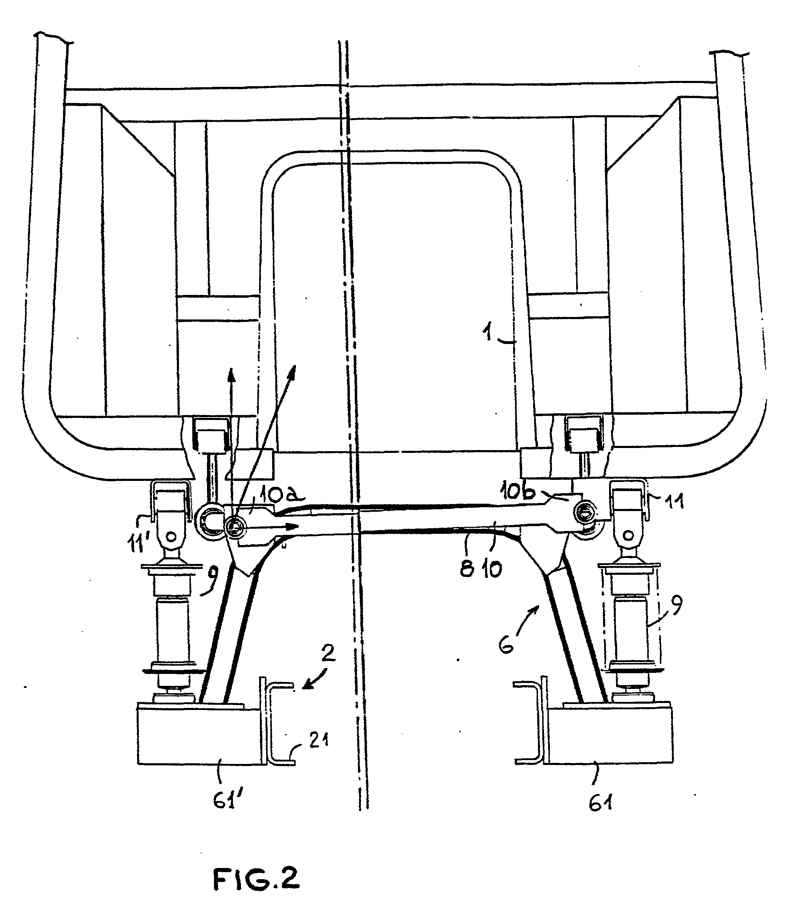

On suppose que la cabine oscille autour d'un axe longitudinal sensiblement perpendiculaire aux structures 6, 7 et comprime les jambes latérales 9, 15. Le support latéral de liaison 11 s'abaisse et la cabine a tendance à s'incliner vers la droite. La décomposition des efforts au niveau du support latéral opposé montre à la figure 2 que ceux-ci sont absorbés par les membrures de la cabine, par les barres transversales 10, 10' travaillant en extension et par la barre anti-devers 23.

Lorsque les jambes latérales opposées 9, 15 sont comprimées, la cabine a tendance à s'incliner vers la gauche et la décomposition des efforts au niveau du support latéral correspondant montre que les efforts sont absorbés par les barres transversales 10, 10' travaillant en compression et par la barre anti-devers 23.

## Amortissement des oscillations consécutives au mouvement de tanguage

Lorsque la cabine s'incline vers l'avant, les jambes élastiques avant 9 sont affaissées et les jambes arrières 15 sont détendues.

Les structures latérales 13, 13' évitent l'affaissement de la cabine.

Lorsque la cabine s'incline vers l'arrière, les jambes élastiques avant 9 sont détendues et les jambes arrière sont affaissées.

Les structures latérales 13, 13' assurent le maintien longitudinal de la cabine.

## Revendications

1. Suspension élastique de cabine de tracteur agricole qui comporte un châssis (2) rigide, une cabine (1) et une suspension élastique (5) qui supporte ladite cabine sur le châssis, dans laquelle la suspension est constituée par des structures transversales avant (6) et arrière (7) portant des attaches d'éléments (9) de la suspension et des structures (13, 13') reliés par des supports de liaison (11) à la cabine, caractérisée par le fait que les structures transversales (6, 7) avant et arrière sont notamment formées par des traverses (8, 14) respectivement ancrées sur des supports (61, 61') de liaison avec le châssis rigide (2) et portent des jambes élastiques avant (9) et arrière (15) parmi lesquelles les jambes avant (9) supportent, par l'intermédiaire d'organes de liaison (11), conjointement la cabine (1) et les structures (13, 13') qui sont disposée latéralement tandis que les jambes arrière (15) supportent la cabine (1).

2. Suspension selon la revendication 1, caractérisée par le fait que les jambes élastiques (9, 15) s'étendent dans les plans transversaux parallèles qui contiennent les traverses (8, 14) avant et arrière et portent à leur extrémité supérieure des articulations entretoisées à l'avant par la cabine et à l'arrière par une traverse supérieure (17) support de la cabine.

3. Suspension selon la revendication 2, caractérisée par le fait que la traverse supérieure (17) support de la cabine s'étend sensiblement dans le plan transversal contenant l'axe de l'essieu arrière du tracteur sur lequel est monté le support (71, 71') des jambes (15) élastiques arrière.

4. Suspension selon l'une quelconque des revendications 1 à 3, caractérisée par le fait que la traverse (8) de structure avant porte les paliers d'une barre (23) anti-devers, en forme de U qui s'étend parallèlement à ladite traverse, dont les branches parallèles à la structure latérale sont reliées à la cabine.

## Patentansprüche

1. Elastische Federung für die Kabine eines landwirtschaftlichen Schleppers, der ein steifes Fahrwerk (2) aufweist, eine Kabine (1) und eine elastische Federung (5), welche die Kabine auf dem Fahrwerk trägt, wobei die Federung aus vorderen Queraufbauten (6) und hinteren Queraufbauten (7) besteht, mit Befestigungsteilen (9) für die Federung und Aufbauten (13, 13'), die durch Verbindungsteile (11) mit der Kabine verbunden sind, dadurch gekennzeichnet, daß die vorderen und hinteren Queraufbauten (6, 7) aus Querträgern (8, 14) bestehen, die an entsprechenden Verbindungshalterungen (61, 61') mit den steifen Fahrwerk (2) verankert sind und elastische vordere Beine (9) und hintere Beine (15) tragen, von denen die vorderen Beine (9) mittels Verbindungsteilen (11) sowohl die Kabine (1) als auch die quer angeordneten Aufbauten (13, 13') tragen, während die hinteren Beine (15) die Kabine (1) tragen.

2. Federung nach Anspruch 1, dadurch gekennzeichnet, daß sich die elastischen Beine (9, 15) in parallelen Querebenen erstrecken, welche die vorderen und hinteren Querträger (8, 14) enthalten und daß sie an ihren oberen Enden Gelenke aufweisen, die vorne mit der Kabine und hinten mit einer oberen die Kabine tragenden Strebe (17) verstrebt sind.

3. Federung nach Anspruch 2, dadurch gekennzeichnet, daß die obere die Kabine tragende Strebe (17) sich im wesentlichen in einer Querebene erstreckt, welche die Achse der Hinterachse des Schleppers enthält, auf der eine Halterung (71, 71') für die elastischen hinteren Beine (15) angeordnet ist.

4. Federung nach einem der Ansprüche 1 bis 3, dadurch gekennzeichnet, daß der Querträger (8) des vorderen Aufbaus die Lager für einen U-förmigen Stabilisator (23) enthält, welcher sich parallel zu diesem Querträger erstreckt und dessen zum Seitenaufbau parallele Arme mit der Kabine verbunden sind.

## Claims

1. A resilient suspension arrangement for a cab of an agricultural tractor which comprises a rigid chassis (2), a cab (1) and a resilient suspension arrangement (5) which supports said cab on the chassis, wherein the suspension arrangement is formed by front and rear transverse structures (6 and 7 respectively) carrying fixings for elements (9) of the suspension and structures (13, 13') connected by connecting supports (11) to the cab, characterised in that the front and rear transverse structures (6, 7) are more particularly formed by transverse members (8, 14) which are respectively anchored to supports (61, 61') for connection to the rigid chassis (2) and carry front and rear resilient legs (9 and 15 respectively) of which the front legs (9), by way of connecting members (11), support jointly the cab (1) and the structures (13, 13') which are disposed laterally while the rear legs (15) support the cab (1).

2. A suspension arrangement according to claim 1 characterised in that the resilient legs (9, 15) extend in the parallel transverse planes which contain the front and rear transverse members (8, 14) and at their upper ends carry pivot mountings braced at the front by the cab and at the rear by an upper transverse member (17) supporting the cab.

3. A suspension arrangement according to claim 2 characterised in that the upper transverse member (17) supporting the cab extends substantially in the transverse plane containing the axis of the rear axle of the tractor on which the support (71, 71') for the resilient legs (15) is mounted.

4. A suspension arrangement according to any one of claims 1 to 3 characterised in that the transverse member (8) of the front structure carries the bearings for an anti-roll bar (23) of U-shape which extends parallel to said transverse member and whose limbs which are parallel to the lateral structure are connected to the cab.

FIG.1

EP 0 273 796 B1

FIG.2

FIG.3

# FIG.4

FIG.5